# FASCICULE DE BREVET EUROPEEN

(11) **EP 3 763 748 B1**
(45) Date de publication et mention de la délivrance du brevet: **13.09.2023**
(21) Numéro de dépôt: 20180366.5
(22) Date de dépôt: 16.06.2020
(51) Int. Cl.: C08F 4/642, C08F 112/14

(54) **PROCÉDÉ DE PRÉPARATION DE POLYMÈRE FLUORÉ PAR CATALYSE ZIEGLER NATTA**
VERFAHREN ZUR HERSTELLUNG VON FLUORPOLYMER DURCH ZIEGLER-NATTA-KATALYSE
METHOD FOR FLUORINATED POLYMER PREPARATION BY ZIEGLER NATTA CATALYSIS

(30) Priorité: 19.06.2019 FR 1906597
(43) Date de publication de la demande: 13.01.2021
(73) Titulaire: Commissariat à l'Énergie Atomique et aux Énergies Alternatives, 75015 Paris (FR); Centre National de la Recherche Scientifique, 75016 Paris (FR); Université Grenoble Alpes, 38400 Saint-Martin-d'Hères (FR)
(72) Inventeur: CLEMENT, Thomas, 38054 Grenoble Cedex 09 (FR); PICARD, Lionel, 38054 Grenoble Cedex 09 (FR); RANNOU, Patrice, 38054 Grenoble Cedex 09 (FR)
(74) Mandataire: Cabinet Nony

(56) Documents cités:
- WO-A1-99/05189
- US-A- 3 481 914

## Description

La présente invention concerne un nouveau procédé de polymérisation de polymères fluorés à l'aide de catalyseur Ziegler Natta.

### Domaine technique

Les polymères fluorés sont des matériaux possédant des propriétés physicochimiques très intéressantes.

En particulier, ils sont connus pour offrir d'excellentes propriétés de stabilité, notamment à hautes températures, une grande inertie chimique, ainsi qu'une bonne résistance au vieillissement.

Les polymères fluorés sont en outre résistants aux solvants, aux acides et aux bases, ils possèdent une faible énergie de surface, une faible inflammabilité, un indice de réfraction bas et une constante diélectrique faible.

Ainsi, ces polymères ont un fort potentiel applicatif dans de nombreux domaines de l'industrie, en particulier dans l'aéronautique, l'automobile, la pétrochimie, le secteur du bâtiment et des travaux publics, l'optique ou encore la microélectronique.

Un des polymères significativement utilisé est le poly(2,3,4,5,6-pentafluorostyrène), autrement appelé PPFS.

Ce polymère fluoré possède des propriétés physico-chimiques intéressantes telles que sa stabilité chimique et thermique, des propriétés antiadhésives ou encore d'hydrophobie et d'oléophobie. Il peut ainsi être utilisé par exemple comme revêtement de surface à propriétés spécifiques.

Ce polymère dérive de la polymérisation du 2,3,4,5,6-pentafluorostyrène, encore appelé PFS, dérivé perfluoré du styrène. Ce monomère est liquide à température ambiante, de sorte qu'il est facile à purifier et à manipuler.

Toutefois, il demeure compliqué de polymériser des polymères fluorés avec de bons rendements et des masses moléculaires élevées.

### Technique antérieure

Différentes voies de synthèse ont été explorées pour synthétiser des polymères fluorés.

Par exemple, la polymérisation radicalaire, contrôlée ou non, a été proposée pour polymériser de tels polymères.

Toutefois, en polymérisation radicalaire libre, les rendements obtenus restent faibles, généralement inférieurs à 35 %, et les masses moléculaires atteintes modérées, de l'ordre de 25 kg.mol⁻¹ (Pryor, W. A. & Huang, T.-L. Macromolecules, 2, 70-77, 1969).

En polymérisation radicalaire contrôlée (ATRP), les rendements sont plus importants, de l'ordre de 96 %, mais les masses molaires sont plus faibles, inférieures à 10 kg.mol⁻¹ (Jankova K., Hvilsted S. Macromolecules, 36, 1753-1758, 2003).

Pour accéder à des masses plus importantes, il a été proposé d'utiliser des macro-amorceurs. Néanmoins, de tels procédés amènent nécessairement à la synthèse de copolymères (Riedel, M. et al., Eur. Polym. J., 47, 675-684, 2011).

US 3 481 914 décrit dans l'exemple 9 la polymérisation d'allylpentafluorobenzène en présence de TiCl3 et d' AlMe3 à 20°C dans un solvant.

Il reste donc difficile de disposer de procédé pour fabriquer des polymères fluorés possédant des masses molaires élevées avec des bons rendements.

Ainsi, le prix des polymères fluorés reste élevé malgré un monomère relativement abordable.

### Exposé de l'invention

Par conséquent, il demeure un besoin de disposer d'un nouveau procédé de synthèse, simple et efficace, permettant d'obtenir des polymères fluorés avec des masses molaires élevées et avec des bons rendements, afin notamment de réduire les coûts de production de ce type de polymères.

### Résumé de l'invention

Ainsi, selon un de ses aspects, l'invention concerne un procédé de préparation d'un polymère de formule (I) : 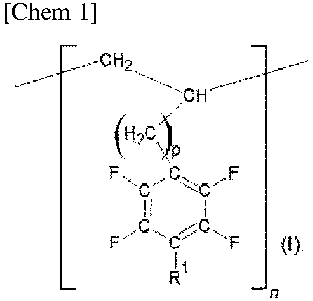 dans laquelle p est égal à 0 ou 1, et R¹ est choisi parmi :
- un atome de fluor, et
- une ou plusieurs chaînes aliphatiques, linéaires ou ramifiées, saturées ou insaturées, fluorées ou non, la ou lesdites chaînes étant éventuellement interrompues par un ou plusieurs hétéroatomes, par un ou plusieurs métalloïdes et/ou par un ou plusieurs (hétéro)cycles, aromatiques ou non, de 4 à 6 chaînons, et éventuellement substituées par un ou plusieurs groupes choisis dans le groupe constitué des groupes hydroxyle, -NH₂ et oxo ;

R₁ étant liée de manière covalente, directement ou *via* un espaceur, au cycle phénylé ;
le procédé comportant au moins les étapes consistant à :
   a) disposer d'un système catalytique de type Ziegler Natta comprenant un catalyseur et un co-catalyseur ;
   b) disposer de monomères de formule (A) : 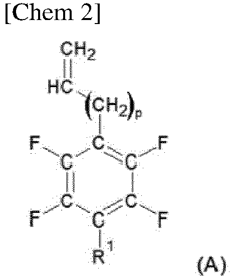 dans laquelle p et R¹ sont tels que définis ci-dessus ;
   c) mettre en contact ledit système catalytique avec lesdits monomères de formule (A) ;
   d) exposer le mélange formé à l'étape c) à des conditions d'agitation et de chauffage propices à la polymérisation des monomères de formule (A),
le mélange en étape d) étant exposé à un palier de température compris entre 60 °C et 80 °C.

Contre toute attente, les inventeurs ont constaté que l'application de la catalyse Ziegler Natta à la polymérisation des monomères fluorés s'avère efficace mais également avantageuse à plusieurs titres.

Ainsi, le procédé selon l'invention permet d'accéder à des polymères fluorés de masses moléculaires moyenne et dispersité ajustables.

En outre, ce procédé permet de polymériser avec ou sans solvant des monomères fluorés.

Enfin, le procédé selon l'invention permet de réduire substantiellement les coûts de production des polymères fluorés, en augmentant le rendement de la synthèse *via* un mode de synthèse déjà développé en industrie.

Certes, les systèmes catalytiques de types Ziegler Natta sont déjà connus pour synthétiser des polymères de grande consommation, tels que les polyoléfines (Senniger Thierry, Catalyse de polymérisation, 1998 ; Soga, K. et al., Prog. Polym. Sci. 22, 1503-1546, 1997 ; Huang, J. et al., Prog. Polym. Sci. 20, 459-526, 1995).

Toutefois, à la connaissance des inventeurs, ces catalyseurs n'ont jamais été proposés pour la synthèse de polymères fluorés tels que décrits selon la présente invention à une température comprise entre 60 °C et 80 °C.

### Brève description des dessins

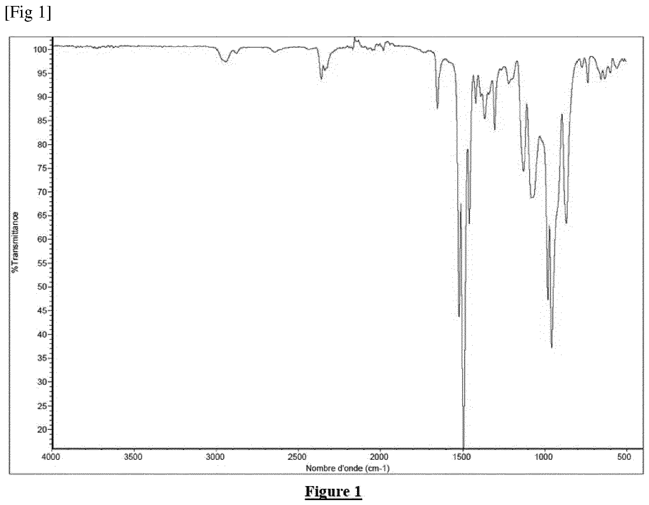

[Fig 1] représente le spectre obtenu par Spectroscopie Infrarouge à Transformée de Fourier (FTIR mode ATR) du poly(2,3,4,5,6-pentafluorostyrène) obtenu dans l'exemple 1.

### Description détaillée

Comme mentionné précédemment, la présente invention concerne un procédé de préparation d'un polymère de formule (I) tel que défini ci-dessus, comportant au moins les étapes consistant à :
a) disposer d'un système catalytique de type Ziegler Natta comprenant un catalyseur et un co-catalyseur ;
b) disposer de monomères de formule (A) tels que définis ci-dessus ;
c) mettre en contact ledit système catalytique avec lesdits monomères de formule (A) ;
d) exposer le mélange formé à l'étape c) à des conditions d'agitation et de chauffage propices à la polymérisation des monomères de formule (A),
le mélange en étape d) étant exposé à un palier de température compris entre 60 °C et 80 °C.

### Polymères fluorés

Le procédé selon l'invention permet de synthétiser des polymères de formule (I) : 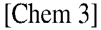 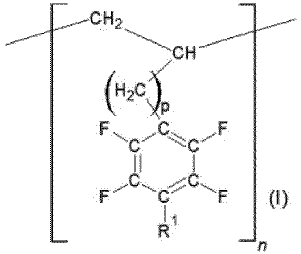 dans laquelle p est égal à 0 ou 1 et R¹ est choisi parmi :
- un atome de fluor, et
- une ou plusieurs chaînes aliphatiques, linéaires ou ramifiées, saturées ou insaturées, fluorées ou non, la ou lesdites chaînes étant éventuellement interrompues par un ou plusieurs hétéroatomes, par un ou plusieurs métalloïdes et/ou par un ou plusieurs (hétéro)cycles, aromatiques ou non, de 4 à 6 chaînons, et éventuellement substituées par un ou plusieurs groupes choisis dans le groupe constitué des groupes hydroxyle, -NH₂ et oxo ;
R¹ étant liée de manière covalente, directement ou *via* un espaceur, au cycle phénylé.

Au sens de l'invention, on entend par :
- « alkyle », un groupe aliphatique saturé, linéaire ou ramifié ; par exemple un groupe C₁₋₄-alkyle représente une chaîne carbonée de 1 à 4 atomes de carbone, linéaire ou ramifiée, plus particulièrement un méthyle, éthyle, propyle, isopropyle, butyle, isobutyle, *tert*-butyle ;
- « (hétéro)cycle aromatique ou non de 4 à 6 chaînons », un groupe cyclique insaturé, partiellement saturé ou saturé, à 4, 5 ou 6 chaînons, comprenant éventuellement un ou plusieurs hétéroatomes, en particulier choisis dans le groupe constitué de l'oxygène, le soufre et l'azote. Un cycle aromatique peut être notamment le phényle ou le benzène ;
- « métalloïdes », les éléments chimiques suivants : bore, silicium, germanium, arsenic, antimoine, tellure, et astate. En particulier, le métalloïde est le bore ou le silicium ;
- « espaceur », un atome ou un groupe d'atomes de valence au moins égale à 2, reliant de manière covalente R₁ et le cycle phénylé. De préférence, l'espaceur relie le cycle phénylé à au moins une chaîne aliphatique de R₁. A titre d'espaceur adapté, on peut citer les atomes d'azote, d'oxygène, et de soufre.

Selon un mode de réalisation préféré, R¹ représente un atome de fluor.

De préférence, p est égal à 0.

Selon un mode de réalisation particulièrement préféré, R¹ représente un atome de fluor et p est égal à 0.

Selon ce mode de réalisation, le polymère formé est le poly(2,3,4,5,6-pentafluorostyrène) (PPFS).

Avantageusement, le procédé selon l'invention permet de synthétiser des polymères de formule (I) possédant une masse moléculaire moyenne en nombre Mₙ comprise entre 10000 g.mol⁻¹ et 1000000 g.mol⁻¹, de préférence entre 10000 g.mol⁻¹ et 100000 g.mol⁻¹, et plus préférentiellement comprise entre 12000 g.mol⁻¹ et 50000 g.mol⁻¹.

En particulier, le procédé selon l'invention permet de synthétiser des polymères de formule (I) possédant une dispersité en masse D_{w} comprise entre 1 et 2,5, de préférence comprise entre 1,03 et 1,60.

La dispersité en masse D_{w} peut être calculée à partir de l'équation D_{w} = M_{w}/Mₙ avec M_{w} représentant la masse moléculaire moyenne en poids, et Mₙ représentant la masse moléculaire moyenne en nombre.

Les masses moléculaires moyennes en nombre Mₙ et en poids M_{w} peuvent notamment être déterminées par Chromatographie d'Exclusion Stérique (CES) à détection triple, par exemple à l'aide d'un dispositif de type Malvern Instruments Viskotek GPCMax couplé à un TDA305 triple détecteur (RI/UV, IV, LALS/RALS), équipé en outre d'un système UV à barrette d'iode.

De manière avantageuse, les polymères de formule (I) formés grâce aux procédés selon l'invention sont des homopolymères.

### Etape (a)

Le procédé selon l'invention met en oeuvre un système catalytique de type Ziegler Natta composé d'un catalyseur et d'un co-catalyseur.

Un tel système catalytique, classiquement utilisé en industrie, permet avantageusement d'obtenir des polymères fluorés de hautes masses moléculaires.

Selon la présente invention, ledit système catalytique de type Ziegler peut être de toutes générations, i.e. 1, 2, 3, 4 ou ultérieures. Ledit système catalytique peut être supporté, homogène ou hétérogène.

Selon un premier mode de réalisation, ledit système catalytique de type Ziegler Natta comprend :
- un catalyseur contenant un dérivé, notamment un halogénure ou un alcoolate, d'un métal de transition du groupe IV, V ou VI de la classification périodique des éléments, de préférence choisi parmi le titane, le zirconium, le vanadium, le cobalt, le chrome et le nickel ; et
- un co-catalyseur contenant un hydrure ou un dérivé alkylé d'un élément des colonnes 1, 2 ou 13 de la classification périodique des éléments, et de préférence contenant un hydrure ou un dérivé alkylé d'aluminium.

Selon une variante particulière de ce mode de réalisation, le catalyseur contenant un dérivé d'un métal de transition du groupe IV, V ou VI de la classification périodique des éléments est choisi parmi TiCl₄, TiCl₃, VCl₃, VCl₄, CoCl₂, Ti(OBu)₄ et Cr(acac)₃.

En particulier, le co-catalyseur contenant un hydrure ou un dérivé alkylé d'un élément des colonnes 1, 2 ou 13 de la classification périodique des éléments est choisi parmi AlEt₃, AlEt₂Cl, AlEtCl, AlEtCl₂, AlBu₃, GaEt₃ et BeEt₂.

De manière préférée, selon ce mode de réalisation, le système catalytique est choisi parmi TiCl₄/AlEt₃, TiCl₃/AlEt₂Cl, TiCl₃/GaEt₃, TiCl₃/BeEt₂, VCl₄/AlEt₂Cl, CoCl₂/AlEtCl, VCl₃/AlEt₃, Ti(OBu)₄/AlEt₃, Cr(acac)₃/AlEt₃, et encore plus préférentiellement est TiCl₄/AlEt₃.

Selon un deuxième mode de réalisation, ledit système catalytique de type Ziegler Natta comprend :
- du TiCl₄ supporté sur du MgCl₂ à titre de catalyseur ; et
- du AlEt₃ à titre de co-catalyseur.

Selon un troisième mode de réalisation, ledit système catalytique de type Ziegler Natta comprend :
- un catalyseur choisi parmi les métallocènes ; et
- un co-catalyseur choisi parmi le méthylaluminoxane (MAO), Ph₃C⁺B(C₆F₅)₄⁻ et B(C₆F₅)₃.

De manière préférée, selon ce mode de réalisation, le système catalytique est choisi parmi ZrCp₂Cl₂/MAO, ZrCp₂Cl₂/B(C₆F₅)₃, ZrCp₂Cl₂/Ph₃C⁺B(C₆F₅)₄⁻, CpTiCl₃/MAO, et

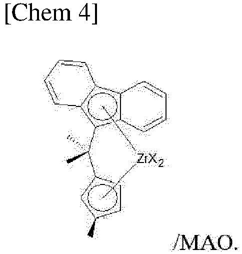

De préférence, le procédé selon l'invention comprend une étape préalable de préparation d'un système catalytique de type Ziegler Natta.

Par exemple, un système catalytique de type Ziegler Natta selon le premier mode de réalisation peut être préparé en ajoutant du triéthyl aluminium à du chlorure de titane, puis en laissant stabiliser le mélange pendant 30 minutes.

Selon un mode de réalisation préféré, le ratio molaire catalyseur / co-catalyseur est compris entre 0,3 et 10, de préférence compris entre 0,5 et 2.

### Etape (b)

Les polymères de formule (I) sont synthétisés à partir de monomères de formule (A) : 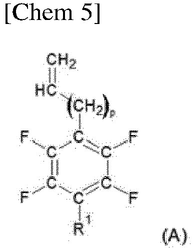 dans laquelle p est égal à 0 ou 1 et R¹ est choisi parmi :
- un atome de fluor, et
- une ou plusieurs chaînes aliphatiques, linéaires ou ramifiées, saturées ou insaturées, fluorées ou non, la ou lesdites chaînes étant éventuellement interrompues par un ou plusieurs hétéroatomes, par un ou plusieurs métalloïdes et/ou par un ou plusieurs (hétéro)cycles, aromatiques ou non, de 4 à 6 chaînons, et éventuellement substituées par un ou plusieurs groupes choisis dans le groupe constitué des groupes hydroxyle, -NH₂ et oxo ;
R¹ étant liée de manière covalente, directement ou *via* un espaceur, au cycle phénylé.

Selon un mode de réalisation préféré, R¹ représente un atome de fluor.

Selon ce mode de réalisation, le monomère est le 2,3,4,5,6-pentafluorostyrène (PFS).

Ainsi, dans un procédé selon l'invention, le monomère de formule (A) est de préférence le PFS et le polymère de formule (I) est de préférence le PPFS.

### Etape (c)

Dans le procédé selon l'invention, le système catalytique de type Ziegler Natta est mis en contact avec les monomères de formule (A) telle que définie ci-dessus.

De préférence, la mise en contact de l'étape c) du système catalytique avec les monomères de formule (A) est effectuée par simple mélange des deux.

Le ratio molaire monomères de formule (A) / système catalytique est en particulier compris entre 10 et 1000, de préférence compris entre 10 et 250.

Selon une première variante, l'étape c) est effectuée en l'absence de solvant.

Selon une deuxième variante, préalablement à l'étape c), les monomères de formule (A) sont mis en solution dans un solvant, de préférence choisi parmi le fluorobenzène et le tétrahydrofurane.

Le ratio molaire monomères de formule (A) en solution dans le solvant / système catalytique est en particulier compris entre 10 et 1000, de préférence compris entre 10 et 250.

Les conditions dans lesquelles peut s'effectuer la mise en contact du système catalytique de type Ziegler Natta avec les monomères de formule (A) peuvent notamment être les suivantes : un ballon est soumis à trois étapes de « freeze-drying » dans de l'azote liquide sous vide afin de purger le système de l'O₂. Les monomères et catalyseurs sont passés sur tamis 4A° pour les sécher de l'eau. L'introduction du système catalytique se fait par introduction à la seringue au travers d'un septum, dans le ballon inerté.

### Etape (d)

Le procédé selon l'invention comprend une étape d) lors de laquelle le mélange formé à l'étape c) est exposé à des conditions d'agitation et de chauffage propices à la polymérisation des monomères de formule (A).

Ces conditions d'agitation et de chauffage sont notamment choisies en fonction du mélange privilégié. Par exemple, lorsque les monomères de formule (A) sont mis en solution dans un solvant dans l'étape c), la température sera avantageusement inférieure au point d'ébullition de ce solvant.

Le mélange de l'étape d) est exposé à un palier de température compris entre 60 °C et 80 °C, notamment pendant une durée d'au moins 10 heures.

Selon une première variante, notamment dans laquelle la polymérisation des monomères de formule (A) est effectuée dans un solvant, le mélange de l'étape d) est exposé à un palier de température compris entre 60 °C et 80 °C pendant une durée d'au moins 40 heures.

En particulier, le mélange de l'étape d) est exposé à un palier de température compris entre 60 °C et 80 °C pendant une durée comprise entre 44 heures et 52 heures.

De préférence, le mélange de l'étape d) est exposé à un palier de température compris entre 60 °C et 80 °C pendant une durée d'au moins 48 heures.

Plus préférentiellement, le mélange de l'étape d) est exposé à 70 °C pendant une durée d'au moins 48 heures.

Selon cette variante, le mélange de l'étape d) est de préférence effectué sous reflux.

Selon une deuxième variante, notamment dans laquelle la polymérisation des monomères de formule (A) est effectuée en masse, le mélange de l'étape d) est exposé à un palier de température compris entre 60 °C et 80 °C, pendant une durée d'au moins 10 heures, puis à un deuxième palier de température compris entre 110 °C et 130 °C, notamment pendant une durée d'au moins 34 heures.

En particulier, le mélange de l'étape d) peut être exposé à un palier de température compris entre 60 °C et 80 °C, pendant une durée comprise entre 10 heures et 14 heures, puis à un deuxième palier de température compris entre 110 °C et 130 °C, notamment pendant une durée comprise entre 34 heures et 38 heures.

De préférence, le mélange de l'étape d) est exposé à un palier de température compris entre 60 °C et 80 °C, pendant une durée d'au moins 12 heures, puis à un deuxième palier de température compris entre 110 °C et 130 °C, en particulier pendant une durée d'au moins 36 heures.

De préférence, le mélange de l'étape d) est laissé sous agitation pendant toute la période de chauffage.

L'agitation peut se faire par exemple de manière manuelle ou mécanique, en particulier à l'aide d'un dispositif classique d'agitation.

En particulier, l'étape d) peut être suivie d'une étape e) lors de laquelle le polymère obtenu est dissout dans un solvant, par exemple dans du fluorobenzène.

Selon un mode de réalisation préféré, le procédé selon l'invention comprend en outre une étape f) de neutralisation du catalyseur, en particulier avec de l'éthanol, puis de filtration du système catalytique.

De préférence, le procédé selon l'invention comprend en outre une étape g) de précipitation du polymère fluoré formé, notamment dans du méthanol.

Préférentiellement, le procédé selon l'invention est effectué en continu.

### Applications

Les polymères de formule (I) formés grâce au procédé selon l'invention peuvent avantageusement être utiles à titre de revêtements, notamment de surface.

De tels revêtements sont avantageusement hydrophobes, oléophobes, inertes chimiquement et thermostables.

Avantageusement, de tels revêtements peuvent être utilisés dans les domaines de l'aéronautique, l'automobile, la pétrochimie, le secteur du bâtiment et des travaux publics, l'optique ou encore la microélectronique.

Ainsi, l'invention concerne également la préparation de revêtements de surface à base de polymères de formule (I) tels que décrits précédemment obtenus grâce au procédé selon l'invention.

### Exemple

### Exemple 1: Synthèse du poly(2,3,4,5,6-pentafluorostyrène) (PPFS) en masse

Dans un ballon, 500 µL de TiCl₄ sont ajoutés à 6 ml de toluène. Le catalyseur est préparé en y ajoutant goutte à goutte une solution de 750 µL de triethyl aluminium dans 6 mL de toluène. Le mélange est stabilisé pendant 30 minutes.

1,5 mL du système catalytique TiCl₄/AlEt₃ formé est ensuite ajouté en une fois à 3 mL de 2,3,4,5,6-pentafluorostyrène (PFS), commercialisé par la Société Sigma-Aldrich sous la référence 196916-25G (CAS : 653-34-9).

Le milieu est agité et porté à 70 °C pendant 12 heures puis à 120 °C pendant 36 heures.

Le produit obtenu est dissout dans du fluorobenzène puis le catalyseur est neutralisé avec de l'éthanol, puis filtré.

La solution de polymère est précipitée dans le méthanol.

Un rendement massique de 92 % est obtenu.

La masse moléculaire moyenne en nombre déterminé par Chromatographie d'Exclusion Stérique (CES) à détection triple est Mₙ = 24 kg/mol avec une dispersité en masse D_{w} = M_{w}/Mₙ = 1,6.

RMN ¹H (400 MHz ; THF-ds ; 298 K) : δ ppm 2,1 ; 2,5 ; 2,9.

RMN ¹³C (400 MHz ; THF-ds ; 298 K) : δ ppm 32,4 ; 37,3 ; 115 ; 136,1 ; 138,7 ; 141,3 ; 143,8 ; 146,2.

RMN ¹⁹F (400 MHz ; THF-ds ; 298 K) : δ ppm -143,8 (t, 2F) ; -157 (s, 1F) ; - 163 (s, 1F).

La Figure 1 illustre le spectre obtenu par Spectroscopie Infrarouge à Transformée de Fourier (FTIR mode ATR).

### Exemple 2 : Synthèse du PPFS dans le fluorobenzène

Dans un ballon, 500 µL de TiCl₄ sont ajoutés à 6 ml de toluène. Le catalyseur est préparé en y ajoutant goutte à goutte une solution de 750 µL de triethyl aluminium dans 6 mL de toluène. Le mélange est stabilisé pendant 30 minutes.

1,5 mL du système catalytique TiCl₄/AlEt₃ formé est ensuite ajouté en une fois à 3 mL de PFS en solution dans le fluorobenzène.

Le milieu est ensuite agité et porté à 70 °C pendant 48 heures.

Le catalyseur est neutralisé avec de l'éthanol, puis filtré.

La solution de polymère est précipitée dans le méthanol.

Un rendement massique de 66 % est obtenu.

La masse moléculaire moyenne en nombre déterminé par Chromatographie d'Exclusion Stérique (CES) à détection triple est Mₙ = 17 kg/mol avec une dispersité en masse D_{w} = M_{w}/Mₙ = 1,3.

### Exemple 3 : Synthèse du PPFS dans le THF

Dans un ballon, 500 µL de TiCl₄ sont ajoutés à 6 ml de toluène. Le catalyseur est préparé en y ajoutant goutte à goutte une solution de 750 µL de triethyl aluminium dans 6 mL de toluène. Le mélange est stabilisé pendant 30 minutes.

1,5 mL du système catalytique TiCl₄/AlEt₃ formé est ensuite ajouté en une fois à 2,5 mL de PFS en solution dans le THF.

Le milieu est ensuite agité et porté à 70 °C pendant 48 heures.

Le catalyseur est neutralisé avec de l'éthanol, puis filtré.

La solution de polymère est précipitée dans le méthanol.

Un rendement massique de 25 % est obtenu.

La masse moléculaire moyenne en nombre déterminé par Chromatographie d'Exclusion Stérique (CES) à détection triple est Mₙ = 13 kg/mol avec une dispersité en masse D_{w} = M_{w}/Mₙ = 1,03.

### Exemple 4 : Synthèse des résultats des exemples 1 à 3

L'ensemble des résultats obtenus dans les exemples 1 à 3 est résumé dans le tableau ci-dessous.

### [Tableau 1]

**Tableau 1**

| **Exemples** | **Solvant** | **Mₙ obtenue** | **D_{w}** | **Rendement** |
|---|---|---|---|---|
| 1 | Sans | 24 kg/mol | 1,6 | 92 % |
| 2 | Fluorobenzene | 17 kg/mol | 1,3 | 66 % |
| 3 | Tetrahydrofurane | 13 kg/mol | 1,03 | 25 % |

Le procédé selon l'invention permet donc d'obtenir le PPFS avec des hauts rendements, jusqu'à supérieur à 90 %, et/ou avec une masse molaire élevée, de 10000 g.mol⁻¹ à 1000000 g.mol⁻¹, et/ou avec une dispersité en masse proche de 1.

## Revendications

1. Procédé de préparation d'un polymère de formule (I) : 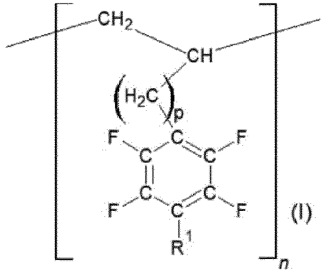 dans laquelle p est égal à 0 ou 1, et R¹ est choisi parmi :
- un atome de fluor, et
- une ou plusieurs chaînes aliphatiques, linéaires ou ramifiées, saturées ou insaturées, fluorées ou non, la ou lesdites chaînes étant éventuellement interrompues par un ou plusieurs hétéroatomes, par un ou plusieurs métalloïdes et/ou par un ou plusieurs (hétéro)cycles, aromatiques ou non, de 4 à 6 chaînons, et éventuellement substituées par un ou plusieurs groupes choisis dans le groupe constitué des groupes hydroxyle, -NH₂ et oxo ;
R¹ étant liée de manière covalente, directement ou *via* un espaceur, au cycle phénylé ;
le procédé comportant au moins les étapes consistant à :
a) disposer d'un système catalytique de type Ziegler Natta comprenant un catalyseur et un co-catalyseur ;
b) disposer de monomères de formule (A) : 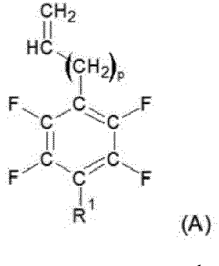 dans laquelle p et R¹ sont tels que définis ci-dessus ;
c) mettre en contact ledit système catalytique avec lesdits monomères de formule (A) ;
d) exposer le mélange formé à l'étape c) à des conditions d'agitation et de chauffage propices à la polymérisation des monomères de formule (A),
le mélange en étape d) étant exposé à un palier de température compris entre 60 °C et 80 °C.

2. Procédé selon la revendication 1, dans lequel la mise en contact de l'étape c) dudit système catalytique avec lesdits monomères de formule (A) est effectuée par simple mélange des deux.

3. Procédé selon l'une quelconque des revendications précédentes, dans lequel le mélange de l'étape d) est exposé à un palier de température compris entre 60 °C et 80 °C pendant une durée d'au moins 10 heures, en particulier pendant une durée d'au moins 40 heures, de préférence pendant une durée d'au moins 48 heures.

4. Procédé selon l'une quelconque des revendications 1 à 3, dans lequel le mélange de l'étape d) est exposé à un palier de température compris entre 60 °C et 80 °C, pendant une durée d'au moins 10 heures, en particulier pendant une durée d'au moins 12 heures, puis à un deuxième palier de température compris entre 110 °C et 130 °C, notamment pendant une durée d'au moins 34 heures, en particulier pendant une durée d'au moins 36 heures.

5. Procédé selon l'une quelconque des revendications précédentes, dans lequel le monomère de formule (A) est le 2,3,4,5,6-pentafluorostyrène et le polymère de formule (I) est le poly(2,3,4,5,6-pentaflurostyrène).

6. Procédé selon l'une quelconque des revendications précédentes, dans lequel l'étape c) est effectuée en l'absence de solvant.

7. Procédé selon l'une quelconque des revendications 1 à 5, dans lequel préalablement à l'étape c), lesdits monomères de formule (A) sont mis en solution dans un solvant, de préférence choisi parmi le fluorobenzène et le tétrahydrofurane.

8. Procédé selon l'un quelconque des revendications précédentes, dans lequel le ratio molaire monomères de formule (A) / système catalytique est compris entre 10 et 1000, de préférence compris entre 10 et 250.

9. Procédé selon l'une quelconque des revendications précédentes, dans lequel ledit système catalytique de type Ziegler Natta comprend :
- un catalyseur contenant un dérivé, notamment un halogénure ou un alcoolate, d'un métal de transition du groupe IV, V ou VI de la classification périodique des éléments, de préférence choisi parmi le titane, le zirconium, le vanadium, le cobalt, le chrome et le nickel, ledit catalyseur étant en particulier choisi parmi TiCl₄, TiCl₃, VCl₃, VCl₄, CoCl₂, Ti(OBu)₄ et Cr(acac)₃ ; et
- un co-catalyseur contenant un hydrure ou un dérivé alkylé d'un élément des colonnes 1, 2 ou 13 de la classification périodique des éléments, et de préférence contenant un hydrure ou un dérivé alkylé d'aluminium, ledit co-catalyseur étant en particulier choisi parmi AlEt₃, AlEt₂Cl, AlEtCl, AlEtCl₂, AlBu₃, GaEt₃ et BeEt₂.

10. Procédé selon la revendication 9, dans lequel ledit système catalytique est choisi parmi TiCl₄/AlEt₃, TiCl₃/AlEt₂Cl, TiCl₃/GaEt₃, TiCl₃/BeEt₂, VCl₄/AlEt₂Cl, CoCl₂/AlEtCl, VCl₃/AlEt₃, Ti(OBu)₄/AlEt₃, Cr(acac)₃/AlEt₃, et de préférence est TiCl₄/AlEt₃.

11. Procédé selon l'une quelconque des revendication 1 à 8, dans lequel ledit système catalytique de type Ziegler Natta comprend :
- du TiCl₄ supporté sur du MgCl₂ à titre de catalyseur ; et
- du AlEt₃ à titre de co-catalyseur.

12. Procédé selon l'une quelconque des revendication 1 à 8, dans lequel ledit système catalytique de type Ziegler Natta comprend :
- un catalyseur choisi parmi les métallocènes ; et
- un co-catalyseur choisi parmi le méthylaluminoxane (MAO), Ph₃C⁺B(C₆F₅)₄⁻ et B(C₆F₅)₃,
ledit système catalytique étant en particulier choisi parmi ZrCp₂Cl₂/MAO, ZrCp₂Cl₂/B(C₆F₅)₃, ZrCp₂Cl₂/Ph₃C⁺B(C₆F₅)₄⁻, CpTiCl₃/MAO, et

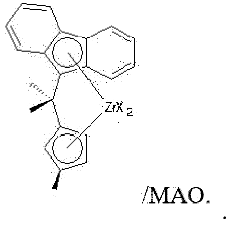

13. Procédé selon l'une quelconque des revendications précédentes, dans lequel le polymère de formule (I) formé possède une masse moléculaire moyenne en nombre Mₙ, telle que déterminée par Chromatographie d'Exclusion Stérique à détection triple, entre 10000 g.mol⁻¹ et 1000000 g.mol⁻¹, de préférence comprise entre 10000 g.mol⁻¹ et 100000 g.mol⁻¹, et plus préférentiellement comprise entre 12000 g.mol⁻¹ et 50000 g.mol⁻¹.

14. Procédé selon l'une quelconque des revendications précédentes, dans lequel le polymère de formule (I) formé possède une dispersité en masse D_{w} comprise entre 1 et 2,5, de préférence comprise entre 1,03 et 1,60, la dispersité en masse D_{w} étant calculée à partir de l'équation D_{w} = M_{w}/Mₙ avec M_{w} représentant la masse moléculaire moyenne en poids et Mₙ représentant la masse moléculaire moyenne en nombre, telles que déterminées par Chromatographie d'Exclusion Stérique à détection triple.

## Patentansprüche

1. Verfahren zur Herstellung eines Polymers der Formel (I): 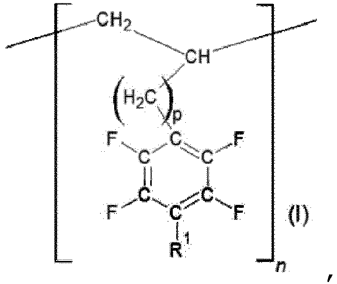
wobei p gleich 0 oder 1 ist und R¹ ausgewählt ist aus:
- einem Fluoratom und
- einer oder mehreren fluorierten oder nichtfluorierten, gesättigten oder ungesättigten, linearen oder verzweigten aliphatischen Ketten, wobei die Kette(n) gegebenenfalls durch ein oder mehrere Heteroatome, durch ein oder mehrere Halbmetalle und/oder durch einen oder mehrere aromatische oder nichtaromatische (Hetero)Cyclen mit 4 bis 6 Gliedern unterbrochen ist bzw. sind und gegebenenfalls durch eine oder mehrere Gruppen substituiert ist bzw. sind, die aus der Gruppe bestehend aus Hydroxyl-, -NH₂- und Oxogruppen ausgewählt ist bzw. sind;
wobei R¹ direkt oder über einen Spacer am Phenylring kovalent gebunden ist;
wobei das Verfahren zumindest die Schritte umfasst, die aus Folgendem bestehen:
a) dem Bereitstellen eines Katalysatorsystems vom Ziegler-Natta-Typ, das einen Katalysator und einen Cokatalysator umfasst;
b) dem Bereitstellen von Monomeren der Formel (A): 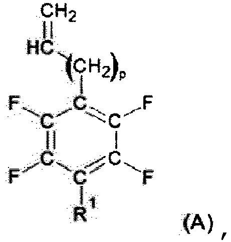 wobei p und R¹ wie oben definiert sind;
c) dem In-Kontakt-Bringen des Katalysatorsystems mit den Monomeren der Formel (A);
d) dem Exponieren der in Schritt c) gebildeten Mischung gegenüber Rühr- und Heizbedingungen, welche die Polymerisation von Monomeren der Formel (A) begünstigen,
wobei die Mischung in Schritt d) gegenüber einer Temperaturstufe zwischen 60 °C und 80 °C exponiert wird.

2. Verfahren nach Anspruch 1, wobei das In-Kontakt-Bringen von Schritt c) des Katalysatorsystems mit den Monomeren der Formel (A) durch einfaches Mischen der beiden erfolgt.

3. Verfahren nach einem der vorhergehenden Ansprüche, wobei die Mischung von Schritt d) gegenüber einer Temperaturstufe zwischen 60 °C und 80 °C für einen Zeitraum von mindestens 10 Stunden, insbesondere für einen Zeitraum von mindestens 40 Stunden, vorzugsweise für einen Zeitraum von mindestens 48 Stunden, exponiert wird.

4. Verfahren nach einem der vorhergehenden Ansprüche 1 bis 3, wobei die Mischung von Schritt d) gegenüber einer Temperaturstufe zwischen 60 °C und 80 °C für einen Zeitraum von mindestens 10 Stunden, insbesondere für einen Zeitraum von mindestens 12 Stunden, und dann gegenüber einer zweiten Temperaturstufe zwischen 110 °C und 130 °C, insbesondere für einen Zeitraum von mindestens 34 Stunden, insbesondere für einen Zeitraum von mindestens 36 Stunden, exponiert wird.

5. Verfahren nach einem der vorhergehenden Ansprüche, wobei das Monomer der Formel (A) 2,3,4,5,6-Pentafluorstyrol ist und das Polymer der Formel (I) Poly(2,3,4,5,6-pentafluorstyrol) ist.

6. Verfahren nach einem der vorhergehenden Ansprüche, wobei Schritt c) ohne Lösungsmittel erfolgt.

7. Verfahren nach einem der Ansprüche 1 bis 5, wobei die Monomere der Formel (A) vor Schritt c) in einem Lösungsmittel gelöst werden, das vorzugsweise aus Fluorbenzol und Tetrahydrofuran ausgewählt ist.

8. Verfahren nach einem der vorhergehenden Ansprüche, wobei das Stoffmengenverhältnis zwischen Monomeren der Formel (A) und dem Katalysatorsystem zwischen 10 und 1000, vorzugsweise zwischen 10 und 250, beträgt.

9. Verfahren nach einem der vorhergehenden Ansprüche, wobei das Katalysatorsystem vom Ziegler-Natta-Typ Folgendes umfasst:
- einen Katalysator, der ein Derivat, insbesondere ein Halogenid oder ein Alkolohat, eines Übergangsmetalls der Gruppe IV, V oder VI des Periodensystems der Elemente enthält, das vorzugsweise aus Titan, Zirconium, Vanadium, Kobalt, Chrom und Nickel ausgewählt ist, wobei der Katalysator insbesondere aus TiCl₄, TiCl₃, VCl₃, VCl₄, CoCl₂, Ti(OBu)₄ und Cr(acac)₃ ausgewählt ist; und
- einen Cokatalysator, der ein Hydrid oder ein alkyliertes Derivat eines Elements der Spalten 1, 2 oder 13 des Periodensystems der Elemente enthält und vorzugsweise ein Hydrid oder ein alkyliertes Aluminiumderivat enthält, wobei der Cokatalysator insbesondere aus AlEt₃, AlEt₂Cl, AlEtCl, AlEtCl₂, AlBu₃, GaEt₃ und BeEt₂ ausgewählt ist.

10. Verfahren nach Anspruch 9, wobei das Katalysatorsystem aus TiCl₄/AlEt₃, TiCl₃/AlEt₂Cl, TiCl₃/GaEt₃, TiCl₃/BeEt₂, VCl₄/AlEt₂Cl, CoCl₂/AlEtCl, VCl_{3/}AlEt₃, Ti(OBu)₄/AlEt₃, Cr(acac)₃/AlEt₃ ausgewählt ist und vorzugsweise TiCl_{4/}AlEt₃ ist.

11. Verfahren nach einem der Ansprüche 1 bis 8, wobei das Katalysatorsystem vom Ziegler-Natta-Typ Folgendes umfasst:
- auf MgCl₂ geträgertes TiCl₄ als Katalysator und
- AlEt₃ als Cokatalysator.

12. Verfahren nach einem der Ansprüche 1 bis 8, wobei das Katalysatorsystem vom Ziegler-Natta-Typ Folgendes umfasst:
- einen aus Metallocenen ausgewählten Katalysator und
- einen Cokatalysator, der aus einem Methylaluminoxan (MAO), Ph₃C⁺B(C₆F₅)₄⁻ und B(C₆F₅)₃ ausgewählt ist,
wobei das Katalysatorsystem insbesondere aus ZrCp₂Cl₂/MAO, ZrCp₂Cl₂/B(C₆F₅)₃, ZrCp₂Cl₂/Ph₃C⁺B(C₆F₅) ₄⁻, CpTiCl_{3/}MAO und 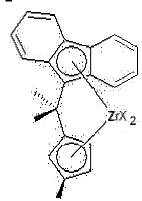 /MAO ausgewählt ist.

13. Verfahren nach einem der vorhergehenden Ansprüche, wobei das gebildete Polymer der Formel (I) ein Zahlenmittel Mₙ der Molmasse, bestimmt mittels Größenausschlusschromatographie mit Dreifachdetektion, zwischen 10 000 g·mol⁻¹ und 1 000 000 g·mol⁻¹, vorzugsweise zwischen 10 000 g·mol⁻¹ und 100 000 g·mol⁻¹ und stärker bevorzugt zwischen 12 000 g·mol⁻¹ und 50000 g·mol⁻¹, aufweist.

14. Verfahren nach einem der vorhergehenden Ansprüche, wobei das gebildete Polymer der Formel (I) eine Massendispersität D_{w} zwischen 1 und 2,5, vorzugsweise zwischen 1,03 und 1,60, aufweist, wobei die Massendispersität D_{w} mittels der Gleichung D_{w} = M_{w}/Mₙ berechnet wird, wobei M_{w} das Gewichtsmittel des Molekulargewichts darstellt und Mₙ das Zahlenmittel des Molekulargewichts darstellt, bestimmt mittels Größenausschlusschromatographie mit Dreifachdetektion.

## Claims

1. Process for preparing a polymer of formula (I): 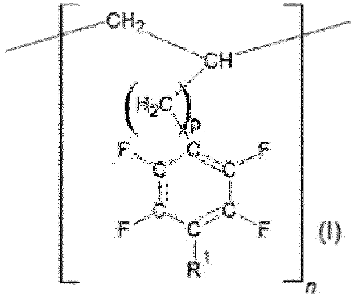 in which p is equal to 0 or 1, and R¹ is chosen from:
- a fluorine atom, and
- one or more linear or branched, saturated or unsaturated, fluorinated or nonfluorinated aliphatic chains, said chain(s) being optionally interrupted by one or more heteroatoms, by one or more metalloids and/or by one or more aromatic or nonaromatic, 4- to 6-membered (hetero)cycles, and optionally substituted by one or more groups chosen from the group consisting of hydroxyl, -NH₂ and oxo groups;
R¹ being covalently bonded, directly or *via* a spacer, to the phenyl ring;
the process comprising at least the steps consisting in:
a) providing a Ziegler-Natta catalytic system comprising a catalyst and a cocatalyst;
b) providing monomers of formula (A): 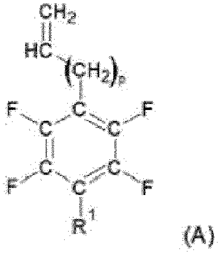 in which p and R¹ are as defined above;
c) bringing said catalytic system into contact with said monomers of formula (A);
d) exposing the mixture formed in step c) to stirring and heating conditions that are suitable for the polymerization of the monomers of formula (A),
the mixture in step d) being exposed to a temperature hold of between 60°C and 80°C.

2. Process according to Claim 1, in which said catalytic system is brought into contact in step c) with said monomers of formula (A) by simple mixing of the two.

3. Process according to either one of the preceding claims, in which the mixture of step d) is exposed to a temperature hold of between 60°C and 80°C for a duration of at least 10 hours, in particular for a duration of at least 40 hours, preferably for a duration of at least 48 hours.

4. Process according to any one of Claims 1 to 3, in which the mixture of step d) is exposed to a temperature hold of between 60°C and 80°C, for a duration of at least 10 hours, in particular for a duration of at least 12 hours, then to a second temperature hold of between 110°C and 130°C, notably for a duration of at least 34 hours, in particular for a duration of at least 36 hours.

5. Process according to any one of the preceding claims, in which the monomer of formula (A) is 2,3,4,5,6-pentafluorostyrene and the polymer of formula (I) is poly(2,3,4,5,6-pentafluorostyrene).

6. Process according to any one of the preceding claims, in which step c) is carried out in the absence of solvent.

7. Process according to any one of Claims 1 to 5, in which prior to step c), said monomers of formula (A) are dissolved in a solvent, preferably chosen from fluorobenzene and tetrahydrofuran.

8. Process according to any one of the preceding claims, in which the monomers of formula (A) / catalytic system molar ratio is between 10 and 1000, preferably between 10 and 250.

9. Process according to any one of the preceding claims, in which said Ziegler-Natta catalytic system comprises:
- a catalyst containing a derivative, notably a halide or an alkoxide, of a transition metal from group IV, V or VI of the Periodic Table of the Elements, preferably chosen from titanium, zirconium, vanadium, cobalt, chromium and nickel, said catalyst being in particular chosen from TiCl₄, TiCl₃, VCl₃, VCl₄, CoCl₂, Ti(OBu)₄ and Cr(acac)₃; and
- a cocatalyst containing a hydride or an alkylated derivative of an element from columns 1, 2 or 13 of the Periodic Table of the Elements, and preferably containing a hydride or an alkylated derivative of aluminium, said cocatalyst being in particular chosen from AlEt₃, AlEt₂Cl, AlEtCl, AlEtCl₂, AlBu₃, GaEt₃ and BeEt₂.

10. Process according to Claim 9, in which said catalytic system is chosen from TiCl₄/AlEt₃, TiCl₃/AlEt₂Cl, TiCl₃/GaEt₃, TiCl₃/BeEt₂, VCl₄/AlEt₂Cl, CoCl₂/AlEtCl, VCl₃/AlEt₃, Ti(OBu)₄/AlEt₃, Cr(acac)₃/AlEt₃, and preferably is TiCl₄/AlEt₃.

11. Process according to any one of Claims 1 to 8, in which said Ziegler-Natta catalytic system comprises:
- TiCl₄ supported on MgCl₂ as catalyst; and
- AlEt₃ as cocatalyst.

12. Process according to any one of Claims 1 to 8, in which said Ziegler-Natta catalytic system comprises:
- a catalyst chosen from metallocenes; and
- a cocatalyst chosen from methylaluminoxane (MAO), Ph₃C⁺B(C₆F₅)₄⁻ and B(C₆F₅)₃,
said catalytic system being in particular chosen from ZrCp₂Cl₂/MAO, ZrCp₂Cl₂/B(C₆F₅)₃, ZrCp₂Cl₂/Ph₃C⁺B(C₆F₅)₄⁻, CpTiCl₃/MAO, and 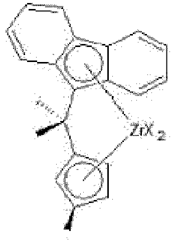 /MAO.

13. Process according to any one of the preceding claims, in which the polymer of formula (I) formed has a number-average molecular mass Mₙ, as determined by triple-detection size-exclusion chromatography, between 10 000 g.mol⁻¹ and 1 000 000 g.mol⁻¹, preferably of between 10 000 g.mol⁻¹ and 100 000 g.mol⁻¹, and more preferentially of between 12 000 g.mol⁻¹ and 50 000 g.mol⁻¹.

14. Process according to any one of the preceding claims, in which the polymer of formula (I) formed has a mass dispersity D_{w} of between 1 and 2.5, preferably of between 1.03 and 1.60, the mass dispersity D_{w} being calculated from the equation D_{w} = M_{w}/Mₙ where M_{w} represents the weight-average molecular mass and Mₙ represents the number-average molecular mass, as determined by triple-detection size-exclusion chromatography.
